# EUROPÄISCHE PATENTSCHRIFT

(11) **EP 3 400 774 B1**
(45) Veröffentlichungstag und Bekanntmachung des Hinweises auf die Patenterteilung: **05.08.2020**
(21) Anmeldenummer: 18152506.4
(22) Anmeldetag: 19.01.2018
(51) Int. Cl.: A01B 79/00, A01D 41/127

(54) **VERFAHREN ZUR AUSARBEITUNG EINES LANDWIRTSCHAFTLICHEN ERNTEPROZESSES**
METHOD FOR IMPLEMENTING AN AGRICULTURAL HARVESTING PROCESS
PROCÉDÉ D'ÉLABORATION D'UN PROCESSUS DE RÉCOLTE AGRICOLE

(30) Priorität: 08.05.2017 DE 102017109849
(43) Veröffentlichungstag der Anmeldung: 14.11.2018
(73) Patentinhaber: CLAAS Selbstfahrende Erntemaschinen GmbH, 33428 Harsewinkel (DE)
(72) Erfinder: Baumgarten, Joachim, 48361 Beelen (DE); Wellensiek, Scott, 33428 Harsewinkel (DE)
(74) Vertreter: CLAAS Gruppe

(56) Entgegenhaltungen:
- EP-A1- 3 075 224
- CN-A- 105 163 575
- DE-A1-102013 106 131
- US-B2- 8 175 775

## Beschreibung

Die Erfindung betrifft ein Verfahren zur Abarbeitung eines landwirtschaftlichen Ernteprozesses mit den Merkmalen des Oberbegriffs von Anspruch 1.

Bei abzuerntenden Feldern mit großen Ausdehnungen kommt oft ein Verbund aus landwirtschaftlichen Erntemaschinen zur Anwendung. Hier ist der optimale Betrieb jeder Erntemaschine des Verbunds von besonderer Bedeutung, um die Effizienz des Ernteprozesses insgesamt zu maximieren. Dies betrifft insbesondere die Arbeitsaggregate der Erntemaschinen, die jeweils der Verarbeitung von Erntegut dienen. Diese Arbeitsaggregate lassen sich zur Anpassung an die jeweiligen Erntebedingungen mit Maschinenparametern einstellen. Der Optimierung der Maschinenparameter kommt im Hinblick auf die angesprochene Effizienz des Ernteprozesses besondere Bedeutung zu.

Das bekannte Verfahren (US 8,175,775 B2), von dem die Erfindung ausgeht, betrifft die Abarbeitung eines landwirtschaftlichen Ernteprozesses auf einem Feld mittels eines Verbunds aus landwirtschaftlichen Erntemaschinen, die über ein drahtloses Datennetzwerk miteinander kommunizieren. Dabei ist es ganz allgemein vorgesehen, dass die Erntemaschine mit der höchsten Ernteleistung, beispielsweise dem höchsten Erntedurchsatz, als sogenannte Master-Erntemaschine definiert wird. Die Master-Erntemaschine stellt ihre aktuellen Maschinenparameter den anderen Erntemaschinen über das Datennetzwerk bereit.

Bei dem bekannten Verfahren kann die hohe Ernteleistung auf Faktoren zurückgehen, die wenig reproduzierbar sind. Dazu gehören beispielsweise ein besonders erfahrener Bediener, der nicht ständig verfügbar ist, ein nur lokal vorhandener Feldabschnitt mit besonders hoher Feldbestandsdichte o. dgl. Die eingeschränkte Reproduzierbarkeit bei der Optimierung ist speziell beim Einsatz eines Verbunds aus einer Vielzahl von Erntemaschinen problematisch.

Der Erfindung liegt daher das Problem zugrunde, das bekannte Verfahren zur Abarbeitung eines landwirtschaftlichen Ernteprozesses derart auszugestalten und weiterzubilden, dass die Reproduzierbarkeit bei der Optimierung der Maschinenparameter der Erntemaschinen mit einfachen Mitteln gesteigert wird. Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Erkenntnis, dass sich eine hohe Reproduzierbarkeit bei der Optimierung von Maschinenparametern am besten dadurch erzielen lässt, wenn nur die Erntemaschine optimierte Maschinenparameter über das Datennetzwerk bereitstellt, die die besten Hardwarevoraussetzungen für die Ermittlung optimierter Maschinenparameter aufweist. Damit ist das Optimierungsergebnis frei von unvorhersehbaren Faktoren, was die Reproduzierbarkeit bei der Optimierung erhöht.

Im Einzelnen wird vorgeschlagen, dass eine Erntemaschine des Verbunds als selbstoptimierende Erntemaschine ausgestaltet ist. Dies bedeutet vorliegend, dass diese Erntemaschine ein Fahrerassistenzsystem zur Steuerung von hinsichtlich der Erntegutverarbeitung optimierten Maschinenparametern aufweist. Wesentlich ist weiter, dass von der selbstoptimierenden Erntemaschine die optimierten Maschinenparameter über das Datennetzwerk bereitgestellt und von anderen Erntemaschinen des Verbunds, die kein Fahrerassistenzsystem zur automatisierten Erzeugung von hinsichtlich der Erntegutverarbeitung optimierten Maschinenparameter aufweisen, empfangen werden.

Mit der vorschlagsgemäßen Lösung reicht es aus, dass der gesamte Verbund nur eine einzige, im obigen Sinne selbstoptimierende Erntemaschine aufweist, während alle anderen Erntemaschinen ohne ein entsprechendes Fahrerassistenzsystem auskommen. Dies bedeutet, dass mit der vorschlagsgemäßen Lösung nicht nur eine besonders reproduzierbare Optimierung von Maschinenparametern, sondern auch eine Reduzierung der Maschinenkosten erreichbar ist.

Die bevorzugte Ausgestaltung gemäß Anspruch 2 betrifft die Abarbeitung des landwirtschaftlichen Ernteprozesses mittels eines Verbunds aus Mähdreschern, die die Arbeitsaggregate Schneidwerk, Schrägförderer, Dreschwerk, Trennvorrichtung, Freigebungsvorrichtung und Verteilvorrichtung aufweisen. Gerade bei Mähdreschern ist die Erzeugung optimierter Maschinenparameter komplex, so dass sich die oben genannten Vorteile des vorschlagsgemäßen Verfahrens bei einem Verbund aus Mähdreschern besonders deutlich zeigen.

Bei der bevorzugten Ausgestaltung gemäß Anspruch 3 gehört zu der Ausstattung der selbstoptimierenden Erntemaschine auch mindestens ein Sensor zur Überwachung der Erntegutverarbeitung und/oder mindestens ein Sensor zur Vorfeldüberwachung. Die betreffenden Sensordaten bilden die Basis für die automatisierte Erzeugung optimierter Maschinenparameter.

Bevorzugte Varianten für die Auslegung des vorschlagsgemäßen Verfahrens zeigen die Ansprüche 4 bis 8, die allesamt auf einen Verbund aus Mähdreschern gerichtet sind.

Die weiter bevorzugten Ausgestaltungen gemäß den Ansprüchen 9 bis 13 betreffen die Maschinenausstattung der empfangenden Erntemaschinen. Eine vollautomatisierte Einstellung von Maschinenparametern ist Gegenstand von Anspruch 11, so dass die Reproduzierbarkeit bei der Optimierung der Maschinenparameter weiter ansteigt. Grundsätzlich ist es aber auch denkbar, dass eine bedienergesteuerte Modifikation der empfangenen, optimierten Maschinenparameter zugelassen wird. Dies ist Gegenstand von Anspruch 13.

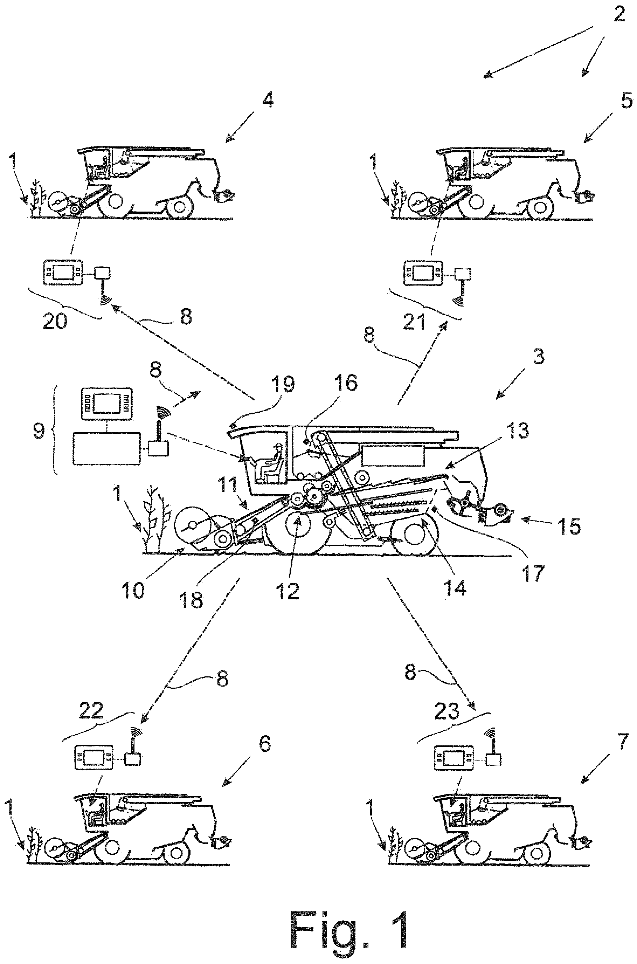

Im Folgenden wird die Erfindung anhand einer lediglich ein Ausführungsbeispiel darstellenden Zeichnung näher erläutert. In der Zeichnung zeigt
- Fig. 1: einen Verbund aus landwirtschaftlichen Erntemaschinen, die einen landwirtschaftlichen Ernteprozess auf einem Feld nach einem vorschlagsgemäßen Verfahren abarbeiten.

Das vorschlagsgemäße Verfahren ist auf die Abarbeitung eines landwirtschaftlichen Ernteprozesses auf einem Feld 1 mittels eines Verbunds 2 aus landwirtschaftlichen Erntemaschinen 3 - 7 gerichtet, wobei die Erntemaschinen 3 - 7 des Verbunds 2 jeweils Erntegut verarbeitende Arbeitsaggregate aufweisen, die zur Anpassung an die jeweiligen Erntebedingungen mit Maschinenparametern einstellbar sind.

Die Erntemaschinen 3 - 7 des Verbunds 2 kommunizieren über ein drahtloses Datennetzwerk 8 miteinander. Hier und vorzugsweise setzt sich das Datennetzwerk 8 aus funkbasierten Punkt-zu-Punkt-Verbindungen zusammen. Denkbar ist aber auch, dass das Datennetzwerk 8 zumindest zum Teil über ein Mobilfunknetz realisiert ist.

Wesentlich ist bei dem in Fig. 1 dargestellten, bevorzugten Verbund 2, dass genau einer Erntemaschine 3 eine herausragende Stellung zukommt. Dies liegt daran, dass die Erntemaschine 3 des Verbunds 2 als selbstoptimierende Erntemaschine in obigem Sinne ausgestaltet ist, die ein Fahrerassistenzsystem 9 zur automatisierten Erzeugung von hinsichtlich der Erntegutverarbeitung optimierten Maschinenparametern aufweist. Ein derartiges Fahrerassistenzsystem ist beispielsweise aus der EP 2 322 029 B1 bekannt, die auf die Anmelderin zurückgeht und die insoweit zum Gegenstand der vorliegenden Anmeldung gemacht wird.

Das Fahrerassistenzsystem 9 verfügt vorzugsweise über eine Rechenvorrichtung, auf der eine Software für die automatisierte Erzeugung von optimierten Maschinenparametern abläuft. Die Erzeugung optimierter Maschinenparameter erfolgt vorzugsweise unter verschiedenen Optimierungskriterien, die insbesondere bedienerseitig definiert und/oder ausgewählt werden können. Das in Bezug genommene Fahrerassistenzsystem ist speziell darauf ausgerichtet, dass der Bediener bei der Erzeugung und/oder Auswahl von optimierten Maschinenparametern einbezogen wird, beispielsweise, indem er Optimierungsvorschläge des Fahrerassistenzsystems annehmen oder ablehnen kann.

Vorschlagsgemäß ist es vorgesehen, dass von der selbstoptimierenden Erntemaschine 3 die optimierten Maschinenparameter über das Datennetzwerk 8 bereitgestellt und von anderen Erntemaschinen 4 - 7 des Verbunds 2, die kein Fahrerassistenzsystem zur automatisierten Erzeugung von hinsichtlich der Erntegutverarbeitung optimierten Maschinenparametern aufweisen, empfangen werden. Dies bedeutet, dass die Richtung des Datenflusses von der Erntemaschine 3 zu den anderen Erntemaschinen 4 - 7 allein dadurch bedingt ist, dass die Erntemaschine 3 ein Fahrerassistenzsystem 9 aufweist und damit selbstoptimierend ist und dass die anderen Erntemaschinen 4 - 7 kein Fahrerassistenzsystem 9 aufweisen und somit nicht selbstoptimierend sind. Vorschlagsgemäß wird die Richtung des Datenflusses damit ausschließlich basierend auf der Maschinenausstattung der Erntemaschinen 3 - 7 getroffen, ohne dass es unmittelbar auf die jeweils aktuelle Ernteleistung ankommt.

Hier und vorzugsweise handelt es sich bei den Erntemaschinen 3 - 7 des Verbunds 2 um Mähdrescher. Grundsätzlich können hier aber auch alle anderen Arten von Erntemaschinen Anwendung finden. Alle Ausführungen zu einer als Mähdrescher ausgestalteten Erntemaschine gelten für alle anderen Arten von Erntemaschinen entsprechend.

Ein Mähdrescher weist vorzugsweise die Arbeitsaggregate Schneidwerk 10, Schrägförderer 11, Dreschwerk 12, Trennvorrichtung 13, Reinigungsvorrichtung 14 und Verteilvorrichtung 15 auf, wie exemplarisch im Zusammenhang mit der Erntemaschine 3 dargestellt ist. Die Erntemaschine 3 nimmt in ihrem frontseitigen Bereich das Schneidwerk 10 auf, welches in an sich bekannter Weise mit dem Schrägförderer 11 verbunden ist. Der den Schrägförderer 11 durchlaufende Erntegutstrom wird einem Dreschwerk 12 zugeführt und anschließend der Trennvorrichtung 13 zum Abscheiden der in dem Erntegutstrom enthaltenen frei beweglichen Körner übergeben. Der Trennvorrichtung 13 ist eine Reinigungsvorrichtung 14 nachgeschaltet, die mit einem nicht dargestellten Ober- und Untersieb ausgestattet ist. Der resultierende Strohanteil wird schließlich über die Verteilvorrichtung 15 auf dem Feld 1 verteilt.

Die Erzeugung optimierter Maschinenparameter durch das Fahrerassistenzsystem 9 der Erntemaschine 3 geht vorzugsweise basierend auf Sensordaten vonstatten. Hierfür ist dem Fahrerassistenzsystem 9 der selbstoptimierenden Erntemaschine 3 mindestens ein Sensor 16, 17 zur Überwachung der Erntegutverarbeitung und/oder mindestens ein Sensor 18, 19 zur Vorfeldüberwachung zugeordnet, wobei das Fahrerassistenzsystem 9 basierend auf den Sensormesswerten die optimierten Maschinenparameter ermittelt. Bei dem Sensor 16, 17 zur Überwachung der Erntegutverarbeitung handelt es sich am Beispiel eines Mähdreschers vorzugsweise um einen Bruchkornsensor zur Ermittlung des Bruchkornanteils oder um einen Kornverlustsensor 17 zur Ermittlung des Anteils von auf dem Feld 1 abgeworfenen Korns. Bei dem Sensor 18, 19 zur Vorfeldüberwachung handelt es sich vorzugsweise um einen Gutfeuchtesensor 18 oder um einen Gutbestandsdichtesensor 19. Andere Sensoren sind bei der Erzeugung optimierter Maschinenparameter grundsätzlich anwendbar.

Wie oben angesprochen, betreffen die optimierten Maschinenparameter eines der oben genannten Arbeitsaggregate 10 - 15 der Erntemaschinen 3 - 7.

Im Einzelnen betreffen die optimierten Maschinenparameter vorzugsweise das Schneidwerk 10. Die Maschinenparameter repräsentieren dabei vorzugsweise die Schnitthöhe und/oder die Haspeldrehzahl. Alternativ oder zusätzlich ist es vorgesehen, dass die optimierten Maschinenparameter das Dreschwerk 12 betreffen und die Trommeldrehzahl und/oder die Korbweite repräsentieren. Weiter alternativ oder zusätzlich kann es vorgesehen sein, dass die optimierten Maschinenparameter die Trennvorrichtung betreffen und die Trennvorrichtungsparameter, insbesondere eine Siebweite der Trennvorrichtung, repräsentieren. Wiederum alternativ oder zusätzlich ist es vorzugsweise vorgesehen, dass die optimierten Maschinenparameter die Reinigungsvorrichtung 14 betreffen und die Siebweite von Ober- und/oder Untersieb und/oder die Gebläseleistung repräsentieren. Schließlich ist es alternativ oder zusätzlich vorzugsweise vorgesehen, dass die optimierten Maschinenparameter die Verteilvorrichtung 15 betreffen und Verteilvorrichtungsparameter, insbesondere Wurfrichtung und Wurfweite für den Strohanteil, repräsentieren. Andere Maschinenparameter sind für die vorschlagsgemäße Optimierung grundsätzlich denkbar.

Zumindest ein Teil der empfangenden Erntemaschinen 4 - 7, hier alle empfangenden Erntemaschinen 4 - 7, weisen eine Empfangssteuerung 20 - 23 auf, mittels der die Arbeitsaggregate der betreffenden, empfangenden Erntemaschine 4 - 7 auf die empfangenen, optimierten Maschinenparameter eingestellt werden. Die Empfangssteuerung 20 - 23 kann Bestandteil einer übergeordneten Maschinensteuerung sein.

Grundsätzlich kann es ferner vorgesehen sein, dass die Empfangssteuerung 20 - 23 eine Erntemaschine 4 - 7 die empfangenen, optimierten Maschinenparameter einfach zu den betreffenden Arbeitsaggregaten der empfangenden Erntemaschine 4 - 7 durchreicht. Hier und vorzugsweise ist es allerdings so, dass die Empfangssteuerung 20 - 23 einer Erntemaschine 4 - 7 die empfangenen, optimierten Maschinenparameter auf die Maschinenausstattung dieser Erntemaschine 4 - 7 anpasst. Der Grund für eine solche Anpassung kann darin liegen, dass die empfangenen Erntemaschinen 4 - 7 grundsätzlich anders dimensioniert sein können als die selbstoptimierende Erntemaschine 3. Beispielsweise können die Dreschtrommeln der Dreschwerke 12 der selbstoptimierenden Erntemaschine 3 einerseits und der anderen Erntemaschinen 4 - 7 andererseits unterschiedlich dimensioniert sein, was eine Anpassung der von der selbstoptimierenden Erntemaschine 3 bereitgestellten, optimierten Trommeldrehzahl und/oder Korbweite erforderlich macht.

Gemäß einer besonders bedienerfreundlichen, bevorzugten Ausgestaltung werden die Arbeitsaggregate der betreffenden Erntemaschine 4 - 7 mittels der Empfangssteuerung 20 - 23 automatisch auf die empfangenen, optimierten Maschinenparameter eingestellt. Dann ist ein Eingriff in die Änderung der Maschinenparameter durch den Bediener nicht vorgesehen.

Grundsätzlich ist es aber auch denkbar, dass die Empfangssteuerung 20 - 23 eine hier und vorzugsweise graphische Bedienerschnittstelle aufweist, über die die empfangenen, optimierten Maschinenparameter angezeigt werden. Darüber kann der Bediener über eine Änderung der Maschinenparameter informiert werden.

Weiter ist es denkbar, dass mittels der Bedienerschnittstelle die empfangenen, optimierten Maschinenparameter bedienergesteuert modifizierbar sind. So kann der Bediener basierend auf seiner eigenen Erfahrung Modifikationen in die Maschinenparameter einbringen und dabei gleichzeitig das Optimierungsergebnis der selbstoptimierenden Erntemaschine 3 nutzen. Alternativ oder zusätzlich kann es vorgesehen sein, dass die Arbeitsaggregate der empfangenden Erntemaschine 4 - 7 mittels der Bedienerschnittstelle bedienergesteuert auf die empfangenen Maschinenparameter eingestellt werden. Mit andere Worten, kann der Bediener die von der selbstoptimierenden Erntemaschine 3 bereitgestellten, optimierten Maschinenparameter für die eigene Erntemaschine 4 - 7 akzeptieren oder verwerfen.

Wie oben angedeutet, kann die vorschlagsgemäße Lösung den Bediener auf ganz unterschiedliche Weise einbinden. Sofern die Erfahrung des Bedieners auf den Erntemaschinen 4 - 7 umfangreich genutzt werden soll, ist dem betreffenden Bediener eine entsprechende Informationsbasis zur Verfügung zu stellen. Dies ist beispielsweise für den Fall vorgesehen, dass dem Fahrerassistenzsystem 9 der selbstoptimierenden Erntemaschine 3 mindestens ein oben genannter Sensor 18, 19 zur Vorfeldüberwachung zugeordnet ist. Hier ist es vorzugsweise so, dass die Sensordaten zur Vorfeldüberwachung von der selbstoptimierenden Erntemaschine 3 über das Datennetzwerk 8 bereitgestellt werden und von den anderen Erntemaschinen 4 - 7 des Verbunds 2 empfangen werden. Dabei ist es weiter vorzugsweise vorgesehen, dass die empfangenden Erntemaschinen 4 - 7 die Sensordaten betreffend die Vorfeldüberwachung über eine oben angesprochene Bedienerschnittstelle der Empfangssteuerung 20 - 23 anzeigen, so dass der Bediener eine Modifikation der Maschinenparameter basierend auf diesen von der selbstoptimierenden Erntemaschine 3 bereitgestellten Informationen vornehmen kann.

### Bezugszeichenliste

- 1: Feld
- 2: Verbund
- 3 - 7: Erntemaschine
- 8: Datennetzwerk
- 9: Fahrerassistenzsystem
- 10: Schneidwerk
- 11: Schrägförderer
- 12: Dreschwerk
- 13: Trennvorrichtung
- 14: Reinigungsvorrichtung
- 15: Verteilvorrichtung
- 16: Bruchkornsensor
- 17: Kornverlustsensor
- 18: Gutfeuchtesensor
- 19: Gutbestandsdichtesensor
- 20 - 23: Empfangssteuerung

## Patentansprüche

1. Verfahren zur Abarbeitung eines landwirtschaftlichen Ernteprozesses auf einem Feld (1) mittels eines Verbunds (2) aus landwirtschaftlichen Erntemaschinen (3 - 7), wobei die Erntemaschinen (3 - 7) des Verbunds (2) jeweils Erntegut verarbeitende Arbeitsaggregate aufweisen, die zur Anpassung an die jeweiligen Erntebedingungen mit Maschinenparametern einstellbar sind, wobei die Erntemaschinen (3 - 7) des Verbunds (2) über ein drahtloses Datennetzwerk (8) miteinander kommunizieren,
**dadurch gekennzeichnet,**
**dass** eine Erntemaschine (3) des Verbunds (2) als selbstoptimierende Erntemaschine ausgestaltet ist, die ein Fahrerassistenzsystem (9) zur automatisierten Erzeugung von hinsichtlich der Erntegutverarbeitung optimierten Maschinenparametern aufweist, und dass von der selbstoptimierenden Erntemaschine (3) die optimierten Maschinenparameter über das Datennetzwerk (8) bereitgestellt und von anderen Erntemaschinen (4 - 7) des Verbunds (2), die kein Fahrerassistenzsystem (9) zur automatisierten Erzeugung von hinsichtlich der Erntegutverarbeitung optimierten Maschinenparametern aufweisen, empfangen werden.

2. Verfahren nach Anspruch 1, **dadurch gekennzeichnet, dass** die Erntemaschinen (3 - 7) des Verbunds (2) als Mähdrescher mit den Arbeitsaggregaten Schneidwerk (10), Schrägförderer (11), Dreschwerk (12), Trennvorrichtung (13), Reinigungsvorrichtung (14) und Verteilvorrichtung (15) ausgestaltet sind und dass die optimierten Maschinenparameter zumindest eines dieser Arbeitsaggregate (10 - 15) betreffen.

3. Verfahren nach Anspruch 1 oder 2, **dadurch gekennzeichnet, dass** dem Fahrerassistenzsystem (9) der selbstoptimierenden Erntemaschine (3) mindestens ein Sensor (16, 17) zur Überwachung der Erntegutverarbeitung, insbesondere ein Bruchkornsensor (16) oder ein Kornverlustsensor (17), und/oder mindestens ein Sensor (18, 19) zur Vorfeldüberwachung, insbesondere ein Gutfeuchtesensor (18) oder ein Gutbestandsdichtesensor (19), zugeordnet ist bzw. sind und dass das Fahrerassistenzsystem (9) basierend auf den Sensormesswerten die optimierten Maschinenparameter ermittelt.

4. Verfahren nach einem der vorhergehenden Ansprüche, **dadurch gekennzeichnet, dass** die optimierten Maschinenparameter das Schneidwerk (10) betreffen und die Schnitthöhe und/oder die Haspeldrehzahl repräsentieren.

5. Verfahren nach einem der vorhergehenden Ansprüche, **dadurch gekennzeichnet, dass** die optimierten Maschinenparameter das Dreschwerk (12) betreffen und die Trommeldrehzahl und/oder die Korbweite repräsentieren.

6. Verfahren nach einem der vorhergehenden Ansprüche, **dadurch gekennzeichnet, dass** die optimierten Maschinenparameter die Trennvorrichtung (13) betreffen und Trennvorrichtungsparameter, insbesondere eine Siebweite der Trennvorrichtung, repräsentieren.

7. Verfahren nach einem der vorhergehenden Ansprüche, **dadurch gekennzeichnet, dass** die optimierten Maschinenparameter die Reinigungsvorrichtung (14) betreffen und die Siebweite von Ober- und/oder Untersieb und/oder die Gebläseleistung repräsentieren.

8. Verfahren nach einem der vorhergehenden Ansprüche, **dadurch gekennzeichnet, dass** die optimierten Maschinenparameter die Verteilvorrichtung (15) betreffen und Verteilvorrichtungsparameter, insbesondere Wurfrichtung und Wurfweite, repräsentieren.

9. Verfahren nach einem der vorhergehende Ansprüche, **dadurch gekennzeichnet, dass** zumindest ein Teil der empfangenden Erntemaschinen (4 - 7) eine Empfangssteuerung (20 - 23) aufweist, mittels der die Arbeitsaggregate auf die empfangenen, optimierten Maschinenparameter eingestellt werden.

10. Verfahren nach einem der vorhergehenden Ansprüche, **dadurch gekennzeichnet, dass** die Empfangssteuerung (20 - 23) einer Erntemaschine (4 - 7) die empfangenen, optimierten Maschinenparameter auf die Maschinenausstattung dieser Erntemaschine (4 - 7) anpasst.

11. Verfahren nach einem der vorhergehenden Ansprüche, **dadurch gekennzeichnet, dass** mittels der Empfangssteuerung (20 - 23) die Arbeitsaggregate automatisch auf die empfangenen, optimierten Maschinenparameter eingestellt werden.

12. Verfahren nach einem der vorhergehenden Ansprüche, **dadurch gekennzeichnet, dass** die Empfangssteuerung (20 - 23) eine insbesondere grafische Bedienerschnittstelle aufweist, über die die empfangenen, optimierten Maschinenparameter angezeigt werden.

13. Verfahren nach einem der vorhergehenden Ansprüche, **dadurch gekennzeichnet, dass** mittels der Bedienerschnittstelle die empfangenen, optimierten Maschinenparameter bedienergesteuert modifizierbar sind, und/oder, dass die Arbeitsaggregate mittels der Bedienerschnittstelle bedienergesteuert auf die empfangenen Maschinenparameter eingestellt werden.

14. Verfahren nach Anspruch 2 oder nach einem der Ansprüche 3 bis 13, **dadurch gekennzeichnet, dass** dem Fahrerassistenzsystem (9) der selbstoptimierenden Erntemaschine (3) mindestens ein Sensor (16, 17) zur Vorfeldüberwachung, insbesondere ein Gutfeuchtesensor (18) oder ein Gutbestandsdichtesensor (19), zugeordnet ist bzw. sind und dass die Sensordaten zur Vorfeldüberwachung von der selbstoptimierenden Erntemaschine (3) über das Datennetzwerk (8) bereitgestellt werden und von den anderen Erntemaschinen (4 - 7) des Verbunds (2) empfangen werden.

## Claims

1. A method of carrying out an agricultural harvesting process on a field (1) by means of an array (2) of agricultural harvesters (3 - 7), wherein the harvesters (3 - 7) of the array (2) each have working assemblies processing crop material, which are adjustable with machine parameters for adaptation to the respective harvesting conditions, wherein the harvesters (3 - 7) of the array (2) communicate with each other by way of a wireless data network,
**characterised in that**
a harvester (3) of the array (2) is in the form of a self-optimising harvester which has a driver assist system (9) for automated generation of machine parameters which are optimised in respect of crop material processing, and the optimised machine parameters are provided by the self-optimising harvester (1) by way of the data network (8) and are received by other harvesters (4 - 7) of the array (2) which do not have any driver assist system (9) for automated generation of machine parameters which are optimised in respect of crop material processing.

2. A method according to claim 1 **characterised in that** the harvesters (3 - 7) of the array (2) are in the form of combine harvesters with the working assemblies header (10), inclined conveyor (11), threshing mechanism (12), separating device (13), cleaning device (14) and spreading device (15) and the optimised machine parameters concern at least one of said working assemblies (10 - 15).

3. A method according to claim 1 or claim 2 **characterised in that** associated with the driver assist system (9) of the self-optimising harvester (3) is at least one sensor (16, 17) for monitoring crop material processing, in particular a broken grain sensor (16) or a grain loss sensor (17), and/or at least one sensor (18, 19) for ahead feed monitoring, in particular a crop moisture content sensor (18) or a crop stand density sensor (19), and the driver assist system (9) ascertains the optimised machine parameters based on the sensor measurement values.

4. A method according to one of the preceding claims **characterised in that** the optimised machine parameters concern the cutting mechanism (10) and represent the cutting height and/or the reel speed of rotation.

5. A method according to one of the preceding claims **characterised in that** the optimised machine parameters concern the threshing mechanism (12) and represent the drum speed of rotation and/or the concave width.

6. A method according to one of the preceding claims **characterised in that** the optimised machine parameters concern the separating device (13) and represent separating device parameters, in particular a sieve width of the separating device.

7. A method according to one of the preceding claims **characterised in that** the optimised machine parameters concern the cleaning device (14) and represent the sieve width of an upper and/or lower sieve and/or blower power.

8. A method according to one of the preceding claims **characterised in that** the optimised machine parameters concern the spreading device (15) and represent spreading device parameters, in particular direction of throw and range of throw.

9. A method according to one of the preceding claims **characterised in that** at least some of the receiving harvesters (4 - 7) have a reception control means (20 - 23) by means of which the working assemblies are set to the received optimised machine parameters.

10. A method according to one of the preceding claims **characterised in that** the reception control means (20 - 30) of a harvester (4 - 7) adapts the received optimised machine parameters to the machine equipment of said harvester (4 - 7).

11. A method according to one of the preceding claims **characterised in that** the working assemblies are automatically set to the received optimised machine parameters by means of the reception control means (20 - 23).

12. A method according to one of the preceding claims **characterised in that** the reception control means (20 - 23) has an in particular graphical user interface, by way of which the received optimised machine parameters are displayed.

13. A method according to one of the preceding claims **characterised in that** the received optimised machine parameters can be modified under operator control by means of the operator interface and/or the working assemblies are set under operator control to the received machine parameters by means of the operator interface.

14. A method according to claim 4 or according to one of claims 3 to 13 **characterised in that** associated with the driver assist system (9) of the self-optimising harvester (3) is at least one sensor (16, 17) for ahead field monitoring, in particular a material moisture content sensor (18) or a material stand density sensor (19) and the sensor data for ahead field monitoring are provided by the self-optimising harvester (3) by way of the data network (8) and are received by the other harvesters (4 - 7) of the array (2).

## Revendications

1. Procédé d'exécution d'un processus de récolte agricole dans un champ (1) au moyen d'une combinaison (2) de machines agricoles de récolte (3 - 7), les machines de récolte (3 - 7) de la combinaison (2) comportant respectivement des organes de travail qui traitent du produit récolté et qui sont réglables avec des paramètres machine pour s'adapter aux conditions de récolte respectives, les machines de récolte (3 - 7) de la combinaison (2) communiquant entre elles par l'intermédiaire d'un réseau de données sans fil (8), **caractérisé en ce qu'**une machine de récolte (3) de la combinaison (2) est conformée en machine de récolte auto-optimisante qui comporte un système d'assistance à la conduite (9) pour la production automatique de paramètres machine optimisés sur le plan du traitement du produit récolté, et **en ce que**, à partir de la machine de récolte auto-optimisante (3), les paramètres machine optimisés sont fournis par l'intermédiaire du réseau de données (8) et reçus par d'autre machines de récolte (4 - 7) de la combinaison (2) qui ne comportent pas de système d'assistance à la conduite (9) pour la production automatisée de paramètres machine optimisés sur le plan du traitement du produit récolté.

2. Procédé selon la revendication 1, **caractérisé en ce que** les machines de récolte (3 - 7) de la combinaison (2) sont conformées en moissonneuses-batteuses avec les organes de travail tablier de coupe (10), convoyeur incliné (11), système de battage (12), dispositif de séparation (13), dispositif de nettoyage (14) et dispositif d'épandage (15), et **en ce que** les paramètres machine optimisés concernent au moins un de ces organes de travail (10 - 15).

3. Procédé selon la revendication 1 ou 2, **caractérisé en ce qu'**au système d'assistance à la conduite (9) de la machine de récolte auto-optimisante (3) est, respectivement sont associés au moins un capteur (16, 17) pour surveiller le traitement de produit récolté, en particulier un capteur de grains cassés (16) ou un capteur de pertes de grain (17) et/ou au moins un capteur (18, 19) pour la surveillance en amont, en particulier un capteur d'humidité de produit (18) ou un capteur de densité de culture de produit (19), et **en ce que** le système d'assistance à la conduite (9) détermine les paramètres machine optimisés sur la base des mesures de capteurs.

4. Procédé selon une des revendications précédentes, **caractérisé en ce que** les paramètres machine optimisés concernent le tablier de coupe (10) et représentent la hauteur de coupe et/ou la vitesse de rotation du rabatteur.

5. Procédé selon une des revendications précédentes, **caractérisé en ce que** les paramètres machine optimisés concernent le système de battage (12) et représentent la vitesse de rotation du batteur et/ou la largeur de contre-batteur.

6. Procédé selon une des revendications précédentes, **caractérisé en ce que** les paramètres machine optimisés concernent le dispositif de séparation (13) et représentent des paramètres de dispositif de séparation, en particulier une largeur de tamis du dispositif de séparation.

7. Procédé selon une des revendications précédentes, **caractérisé en ce que** les paramètres machine optimisés concernent le dispositif de nettoyage (14) et représentent la largeur de tamis des tamis supérieur et/ou inférieur et/ou la puissance du ventilateur.

8. Procédé selon une des revendications précédentes, **caractérisé en ce que** les paramètres machine optimisés concernent le dispositif d'épandage (15) et représentent des paramètres du dispositif d'épandage, en particulier la direction de projection et la largeur de projection.

9. Procédé selon une des revendications précédentes, **caractérisé en ce qu'**au moins une partie des machines de récolte réceptrices (4 - 7) comporte une commande de réception (20 - 23) au moyen de laquelle les organes de travail sont réglés en fonction des paramètres machine optimisés reçus.

10. Procédé selon une des revendications précédentes, **caractérisé en ce que** la commande de réception (20 - 23) d'une machine de récolte (4 - 7) adapte les paramètres machine optimisés reçus à l'équipement machine de cette machine de récolte (4 - 7).

11. Procédé selon une des revendications précédentes, **caractérisé en ce que**, au moyen de la commande de réception (20 - 23), les organes de travail sont réglés automatiquement en fonction des paramètres machine optimisés reçus.

12. Procédé selon une des revendications précédentes, **caractérisé en ce que** la commande de réception (20 - 23) comporte une interface utilisateur en particulier graphique par l'intermédiaire de laquelle les paramètres machine optimisés reçus sont affichés.

13. Procédé selon une des revendications précédentes, **caractérisé en ce que**, au moyen de l'interface utilisateur, les paramètres machine optimisés reçus sont modifiables de manière commandée par l'utilisateur, et/ou **en ce que** les organes de travail sont réglés au moyen de l'interface utilisateur de manière commandée par l'utilisateur en fonction des paramètres machine reçus.

14. Procédé selon la revendication 2 ou selon une des revendications 3 à 13, **caractérisé en ce qu'**au système d'assistance à la conduite (9) de la machine de récolte auto-optimisante (3) est associé, respectivement sont associés au moins un capteur (16, 17) pour la surveillance en amont, en particulier un capteur d'humidité de produit (18) ou un capteur de densité de culture de produit (19), et **en ce que** les données de capteur sur la surveillance en amont sont fournies par la machine de récolte auto-optimisante (3) par l'intermédiaire du réseau de données (8) et sont reçues par les autres machines de récolte (4 - 7) de la combinaison (2).
